# DEMANDE DE BREVET EUROPEEN

(11) **EP 0 681 407 A1**
(43) Date de publication de la demande: **08.11.1995**
(21) Numéro de dépôt: 95200983.5
(22) Date de dépôt: 19.04.1995
(51) Int. Cl.: H04Q 7/30

(54) **Système de transmission par multiplexage temporel, entre au moins une station satellite, une station de base et une station nodal**

(30) Priorité: 27.04.1994 FR 9405091
(71) Demandeur: T.R.T. TELECOMMUNICATIONS RADIOELECTRIQUES ET TELEPHONIQUES, 75013 Paris (FR); PHILIPS ELECTRONICS N.V., 5621 BA Eindhoven (NL)
(72) Inventeur: Saintot, Patrice, F-75008 Paris (FR)
(74) Mandataire: Chaffraix, Jean

(57) **Abrégé**

Le système est formé au moins d'une station de base (SR1,SR2,...) destinée à retransmettre des informations présentant des débits variables entre un nombre N (N ≧ 1) de stations satellites (M1,M2,...) qui lui sont rattachées et d'une station nodale (K,K',...), ce système comporte une première liaison de multiplex temporel entre les N stations satellites et la station de base et une deuxième liaison multiplex temporel (L1,L2,...) entre la station de base et la station nodale, la première liaison multiplex comportant des intervalles de temps pour contenir les informations de chaque station satellite tandis que la deuxième liaison multiplex comporte des intervalles de temps pour les informations relatives à toutes les stations satellites. Il a été prévu :
- que les intervalles de temps de la première liaison contiennent "n" éléments binaires attribués selon le débit des informations à transmettre,
- que les intervalles de temps de la deuxième liaison soient organisés en trame de M mots à "n" éléments binaires,
- et que M soit proche d'un multiple de N.

Application: réseaux radioélectriques et en particulier réseau de communication radio-mobile.

## Description

La présente invention concerne un système de transmission d'informations formé au moins d'une station de base destinée à retransmettre des informations présentant des débits variables entre un nombre N (N ≧ 1) de stations satellites qui lui sont rattachées et d'une station nodale, système comportant une première liaison de multiplex temporel entre les N stations satellites et la station de base et une deuxième liaison multiplex temporel entre la station de base et la station nodale, la première liaison multiplex comportant des intervalles de temps pour contenir les informations de chaque station satellite tandis que la deuxième liaison multiplex comporte des intervalles de temps pour les informations relatives à toutes les stations satellites.

La présente invention concerne aussi une station de base et une station satellite convenant à un tel dispositif.

Une telle invention trouve de nombreuses applications notamment dans les systèmes radioélectriques.

Un système du genre mentionné dans le préambule est connu de la demande de brevet européen n° EP 0 562 494 se rapportant à la norme du DECT ("Digital European Cordless Telecommunications"). Comme ce système connu respecte ladite norme, le nombre de canaux est fixe et n'est pas adapté aux réseaux radioélectriques où les ressources de canaux doivent être adaptées aux transmissions d'informations en fonction des besoins. Un exemple d'un tel système est celui décrit dans l'article : " LES SYSTEMES DE RADIOCOMMUNICATION MOBILE A RESSOURCES PARTAGEES TN10-TN100-TN200 " de M. Coudreuse et al, paru dans la revue COMMUTATION & TRANSMISSION N° 2 de 1989.

L'invention propose un système du genre mentionné dans le préambule qui permet une bonne adaptation en ce qui concerne l'écoulement du trafic à assurer.

Pour cela, un tel système est remarquable en ce que :
- les intervalles de temps de la première liaison contiennent "n" éléments binaires attribués selon le débit des informations à transmettre,
- les intervalles de temps de la deuxième liaison sont organisés en trame de M mots à "n" éléments binaires,
- M est proche d'un multiple de N.

Selon une caractéristique importante de l'invention, la deuxième liaison est une liaison satisfaisant les normes G703 du C.C.I.T.T qui définissent une jonction J64. La liaison TRANSFIX proposée par FRANCE TELECOM à un tarif relativement bon marché répond également à cette norme. D'autres liaisons de ce type conviennent aussi parfaitement à l'invention.

La description suivante accompagnée des dessins ci-annexés, le tout donné à titre d'exemple non limitatif, fera bien comprendre comment l'invention peut être réalisée.
- La figure 1 montre un réseau radioélectrique dans lequel l'invention est mise à profit.
- La figure 2 montre un schéma d'une station de base.
- La figure 3 montre un schéma d'une station satellite.
- La figure 4 montre la structure d'un premier paquet de multiplexage.
- La figure 5 montre la structure du multiplex temporel des signaux transmis entre une station de base et une station nodale pour quatre ensembles d'émission-réception.
- La figure 6 montre la structure du multiplex temporel des signaux transmis entre une station de base et une station nodale pour huit ensembles d'émission-réception.

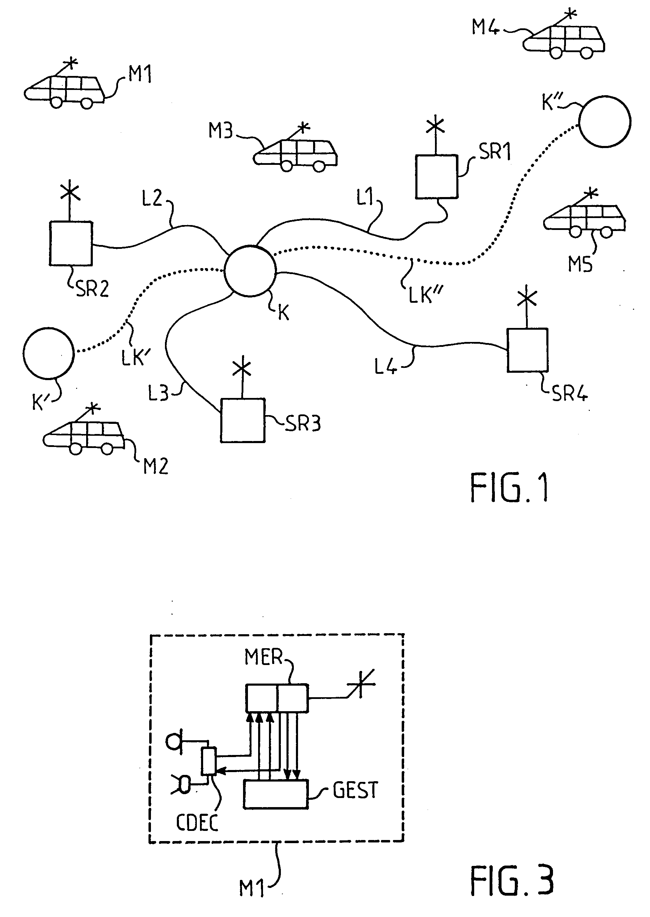

La figure 1 montre un réseau radioélectrique qui est formé d'un ensemble de stations satellites ou stations mobiles M1, M2, M3, M4, M5,... Celles-ci peuvent être embarquées à bord de véhicules automobiles comme le suggère la figure. Ces stations mobiles communiquent, par voie radioélectrique, avec des stations relais ou stations de base SR1, SR2, SR3, SR4,... qui sont reliées respectivement par des liaisons fixes L1, L2, L3, L4,... à une première station nodale K qui peut être aussi reliée à d'autres stations nodales K', K'',... au moyen de liaisons LK', LK'',... La description d'un système de ce genre peut ête trouvée dans l'article précité de la revue COMMUTATION & TRANSMISSION.

Les liaisons fixes L1, L2, L3, L4,... peuvent être des liaisons du réseau téléphonique national, ce qui permet de relier des stations de base situées loin les unes des autres.

A un moment donné, des stations mobiles peuvent être rattachées à une station de base et les informations qui les concernent doivent transiter par une des liaison fixes L1, L2, L3, L4,... précitées. Ainsi, dans le cadre de l'exemple décrit, les stations mobiles M1, M3, M4 et M5 sont rattachées à la station de base SR1 et la liaison fixe L1 écoulera leur trafic.

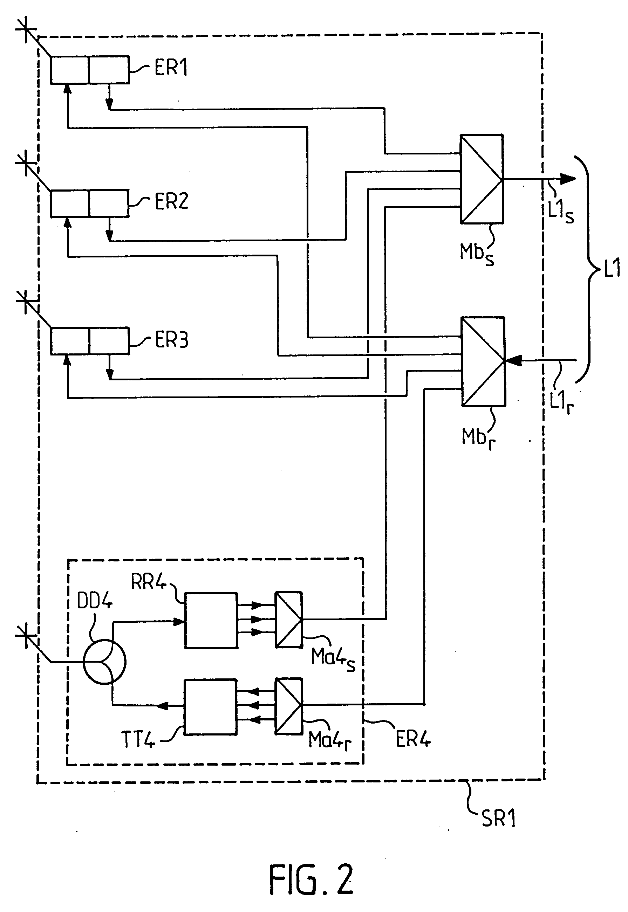

La figure 2 montre le schéma de la station de base SR1, les autres stations pouvant avoir la même structure. Cette station est reliée à la station nodale K au moyen d'une liaison L1 du type J64 bidirectionnelle ou codirectionnelle ce qui est figuré par les références L1ₛ et L1ᵣ pour les informations qui émanent de la station de base et pour les informations qui sont reçues par celle-ci respectivement. Cette station est munie de quatre ensembles d'émission-réception ER1, ER2, ER3 et ER4 ce qui permet donc de communiquer, par voie radioélectrique, avec quatre stations mobiles M1, M3, M4 et M5 en même temps. Pour établir les communications avec les stations mobiles et organiser la gestion du réseau, différentes informations de service peuvent être utilisées. Par exemple, il peut y avoir des informations SVS qui présentent un débit de 200 éléments binaires/s et qui permettent de synchroniser ensemble les stations nodales et aussi des informations de gestion MMTS à 1200 éléments binaires/s. Les signaux de parole sont élaborés à partir d'un codec, non représenté sur cette figure, faisant partie desdites stations mobiles. Leur débit est de l'ordre de 10 000 éléments binaires/s (10 keb/s) ou moins.

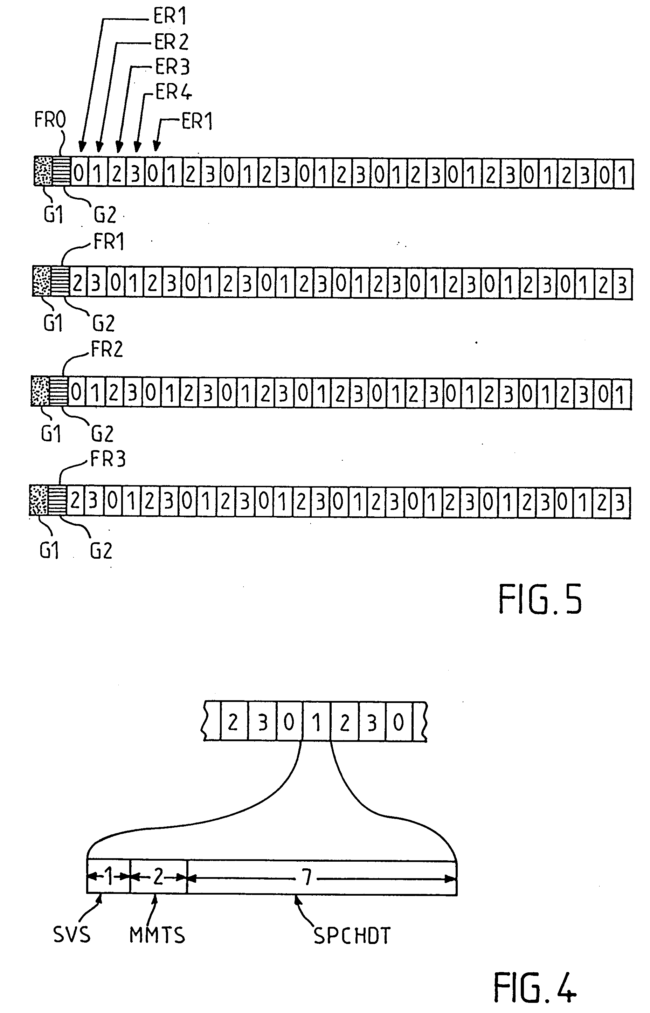

La figure 3 montre schématiquement la structure de la station mobile M1, la structure des autres stations mobiles pouvant être identique. La station M1 comporte un ensemble d'émission-réception MER auquel est rattaché un codeur-décodeur de parole CDEC qui permet à un correspondant de communiquer par phonie vers une station de base. Cette station mobile comporte aussi un ensemble de gestion GEST qui assure la gestion, l'affectation des canaux et aussi sa synchronisation. Ceci est assuré, par exemple, par les informations SVS et MMTS déjà citées.

Pour transmettre toutes ces informations avec le débit qui leur convient, l'invention propose une répartition de leurs éléments binaires, comme représentée à la figure 4, effectuée par un multiplexeur Ma4ₛ pour les informations provenant des quatre stations mobiles. Ces informations destinées à ces stations sont restituées par un démultiplexeur Ma4ᵣ. Les entrées du multiplexeur Ma4ₛ sont reliées aux sorties d'un récepteur radioélectrique RR4 qui fournit lesdites informations SVS, MMTS et les informations de paroles. D'une manière symétrique le démultiplexeur Ma4ᵣ fournit les informations SVS, MMTS et les informations de paroles à un émetteur radioélectrique TT4. Un duplexeur d'antenne DD4 permet d'utiliser une même antenne pour coupler l'émetteur TT4 et le récepteur RR4.

Comme cela vient d'être dit, les éléments binaires à la sortie du multiplexeur Ma4ₛ sont répartis en fonction des informations à transmettre. A cette sortie, on a affaire à un mot de 10 éléments binaires dont un est affecté aux informations SVS, deux, aux informations MMTS et sept aux informations de paroles SPCHDT (voir la figure 4).

Ainsi, on obtient :
- un débit de 1,5 keb/s pour les informations SVS,
- un débit de 3 keb/s pour les informations MMTS,
- un débit de 10,5 keb/s pour les informations SPCHDT.

Bien que l'on ait représenté les multiplexeurs et démultiplexeurs sous la forme d'éléments séparés, ces fonctions de multiplexage peuvent être exécutées au moyen d'une ligne de données commune (bus) dont l'accès est accordé à chaque ensemble émetteur-récepteur à tour de rôle en fonction de l'organisation du multiplex défini ci-dessous.

La figure 5 montre l'organisation du multiplex utilisé pour les liaisons fixes. Ce multiplex utilise de préférence les spécifications J64 déjà mentionnées. Ce multiplex est organisé en 120 intervalles de temps pour des mots de 10 éléments binaires répartis en quatre trames FR0, FR1, FR2 et FR3 formées chacune de 32 mots de 10 éléments binaires. Deux mots G1 et G2 parmi ces trente deux permettent la gestion de ce multiplex, ce qui fait que le débit utile de ce multiplex est de 60 keb/s. Les trames FR0, FR1, FR2 et FR3 ont chacune une durée de 5 ms et la multitrame une durée de 20 ms. Les intervalles de temps repérés sur cette figure par 0, 1, 2 et 3 sont affectés respectivement aux ensembles d'émission-réception ER1, ER2, ER3 et ER4.

Pour bien montrer les possibilités de l'invention, on représente dans le tableau suivant les débits de différents codecs du marché qui fournissent une série d'éléments binaires dans une durée de trame.

| CODEC | Débit net | Débit brut pour canal radiomobile | Durée de la trame |
|---|---|---|---|
| STANDARD GSM | 13 keb/s | 22,8 keb/s | 20 ms |
| STANDARD 1/2 GSM | 5,7 keb/s | 11,4 keb/s | 20 ms |
| STANDARD TETRA | 4,8 keb/s | 7,2 keb/s | 30 ms |
| STD US PFS-106 Control system | 4,8 keb/s | sans codage | 30 ms |
| Qualcomm Q4400 | 4 4,8 8 ou 9,6 keb/s | sans codage | ? |

Le tableau qui suit montre comment on peut effectuer une répartion différente lorsqu'on a affaire à un nombre plus grand de stations satellites qui sont rattachées à une station de base.

| Nombre de stations satellites | Débit MMTS | Débit de parole | récurrence de l'élément binaire SVS |
|---|---|---|---|
| 4 | 3 keb/s | 10,5 keb/s | 0,666 ms |
| 5 | 2,4 keb/s | 9,6 keb/s | 0,833 ms |
| 6 | 2 keb/s | 7 keb/s | 1 ms |

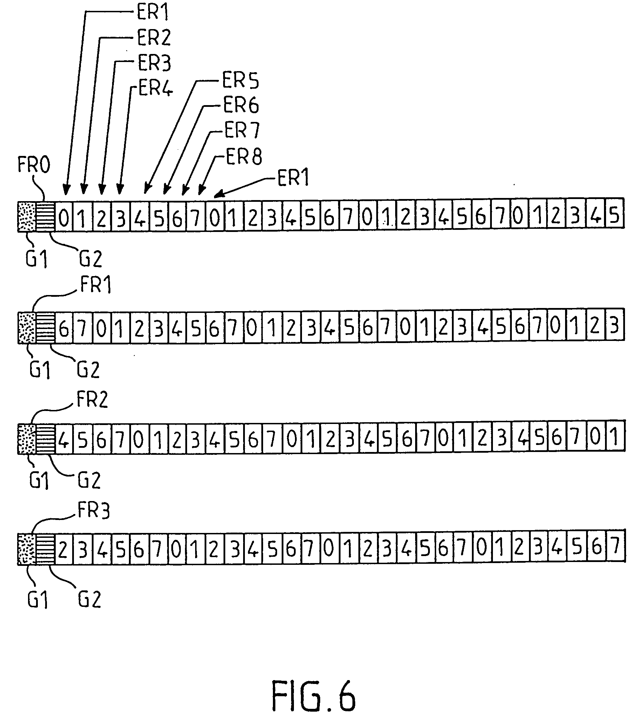

Ainsi la multitrame de 120 intervalles, montrée à la figure 4, peut être partagée pour ces différents nombres de stations satellites car 120 est un multiple de 4, de 5 et de 6 notamment, ce qui correspond ordinairement à un trafic de phonie. Au besoin certains de ces intervalles de temps peuvent être inoccupés. Si le trafic à écouler nécessite un débit binaire faible des transmissions de données, le nombre de stations satellites peut être plus important, par exemple 8, comme cela est montré à la figure 6. Cette figure 6 montre bien comment les 120 intervalles de temps sont affectés aux différents ensembles d'émission-réception. La succession des affectations se poursuit d'une trame à l'autre. Ainsi, comme la trame FR0 se termine par un intervalle de temps "5", la trame FR1 commence, après les intervalles de temps affectés à G1 et G2, par l'intervalle de temps "6" et ainsi de suite.

Les stations nodales sont des commutateurs de voie tels que ceux exploités par les offices publics de télécommunications.

## Revendications

1. Système de transmission d'informations formé au moins d'une station de base destinée à retransmettre des informations présentant des débits variables entre un nombre N (N ≧ 1) de stations satellites qui lui sont rattachées et d'une station nodale, système comportant une première liaison de multiplex temporel entre les N stations satellites et la station de base et une deuxième liaison multiplex temporel entre la station de base et la station nodale, la première liaison multiplex comportant des intervalles de temps pour contenir les informations de chaque station satellite tandis que la deuxième liaison multiplex comporte des intervalles de temps pour les informations relatives à toutes les stations satellites, caractérisé en ce que :
- les intervalles de temps de la première liaison contiennent "n" éléments binaires attribués selon le débit des informations à transmettre,
- les intervalles de temps de la deuxième liaison sont organisés en trame de M mots à "n" éléments binaires,
- M est proche d'un multiple de N.

2. Système de transmission d'informations selon la revendication 1, caractérisé en ce que la deuxième liaison est une liaison du type défini par la jonction J64.

3. Système de transmission d'informations selon la revendication 1, caractérisé en ce que les intervalles de temps de la deuxième liaison sont affectés à tour de rôle à chaque station satellite.

4. Station de base convenant à un système selon l'une des revendications 1 à 3, caractérisé en ce qu'elle comporte N ensemble(s) d'émission-réception affecté(s) chacun à une station satellite et des moyens de multiplexage démultiplexage pour assurer la répartion des informations entre la deuxième liaison et le(s)dit(s) ensemble(s) d'émission-réception.

5. Station satellite convenant à un système selon l'une des revendications 1 à 3, caractérisée en ce qu'elle comporte des moyens pour émettre et pour recevoir des informations de différents débits.
